(19) Europäisches Patentamt
European Patent Office
Office européen des brevets

(11) **EP 4 693 460 A1**

(12) **EUROPEAN PATENT APPLICATION**
published in accordance with Art. 153(4) EPC

(43) Date of publication:
**11.02.2026 Bulletin 2026/07**

(21) Application number: 23930921.4

(22) Date of filing: **15.12.2023**

(51) International Patent Classification (IPC):
*H01M 4/36* (2006.01)    *H01M 4/13* (2010.01)
*H01M 4/38* (2006.01)    *H01M 4/48* (2010.01)
*H01M 4/62* (2006.01)    *H01M 4/587* (2010.01)

(52) Cooperative Patent Classification (CPC):
**H01M 4/13; H01M 4/36; H01M 4/38; H01M 4/48;**
**H01M 4/587; H01M 4/62;** Y02E 60/10

(86) International application number:
**PCT/JP2023/044965**

(87) International publication number:
**WO 2024/202301 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **29.03.2023 JP 2023052993**

(71) Applicant: AESC Japan Ltd.
**Yokohama-Shi, Kanagawa 220-0012 (JP)**

(72) Inventors:
• **AKAGAWA, Kazuhiro**
**Zama-shi, Kanagawa 252-0012 (JP)**
• **LU, Chiaying**
**Zama-shi, Kanagawa 252-0012 (JP)**
• **SHIMOJI, Risa**
**Zama-shi, Kanagawa 252-0012 (JP)**
• **NAKAHASHI, Narumi**
**Zama-shi, Kanagawa 252-0012 (JP)**

(74) Representative: **Becker, Eberhard**
**Becker Kurig & Partner**
**Patentanwälte mbB**
**Bavariastraße 7**
**80336 München (DE)**

(54) **NEGATIVE ELECTRODE FOR NONAQUEOUS ELECTROLYTE SECONDARY BATTERY, AND NONAQUEOUS ELECTROLYTE SECONDARY BATTERY USING SAME**

(57)    An objective of the present invention is to suppress the expansion and contraction when charging and discharging a nonaqueous electrolyte secondary battery, including lithium ion secondary batteries, when an Si-based negative electrode active material is used, to improve the lifespan (cycle characteristics) of the nonaqueous electrolyte secondary battery, and to improve rapid charging properties. The present invention is a negative electrode for a nonaqueous electrolyte secondary battery, the negative electrode containing a negative electrode active material, a binder, and a conductive additive. The negative electrode active material contains: a silicon-based active material (A) containing $SiO_x$ (in the formula, x is a number satisfying $0.5 \leq x \leq 1.6$); a carbon-based active material (B) composed of secondary particles formed by aggregating primary particles; and a carbon-based active material (C) composed of primary particles different from the carbon-based active material (B). The average particle diameter of metallic silicon particles contained in the silicon-based active material (A) is 0.5-10nm, the conductive additive has a linear shape, the diameter of said line being is 1-4nm, and the length of the line being 2-15μm.

EP 4 693 460 A1

**Description**

Technical Field

The invention relates to a negative electrode for nonaqueous electrolyte secondary battery, and a nonaqueous electrolyte secondary battery using the negative electrode for nonaqueous electrolyte secondary battery.

Related Art

Nonaqueous electrolyte secondary batteries have been put into practical use as automotive batteries including hybrid vehicles and electric vehicles, and are also used as batteries for small electronic devices including mobile terminals. As such batteries, lithium ion secondary batteries are particularly widely used. Lithium ion secondary batteries are required to have various characteristics such as output characteristics, energy density, capacity, lifespan, and high-temperature stability. In order to miniaturize batteries in particular, improving the volumetric energy density of batteries and increasing capacity have become urgent issues. In particular, lithium ion secondary batteries for electric vehicles are required to improve energy density in order to further extend the driving range. For this reason, various improvements have been made to battery configurations including electrodes and electrolytic solutions.

It is known to use graphite as a negative electrode active material for lithium ion secondary batteries. Graphite is widely used because it is inexpensive, has little deterioration due to charge and discharge cycles of batteries, and has high safety. However, in conventional lithium ion secondary batteries using graphite materials as negative electrode active materials, further improvement in energy density is difficult to expect, so exploration of negative electrode active material materials with even higher capacity has been conducted. As high-capacity negative electrode active materials, silicon-based negative electrode active materials including silicon and silicon oxide (hereinafter sometimes referred to as "Si-based negative electrode active materials", "Si-based negative electrode active materials", etc.) are attracting attention.

For example, Patent Document 1 discloses a negative electrode active material that contains a composite including silicon and silicon dioxide and a graphite component as a negative electrode active material, in which the average particle diameter of silicon is 1 to 100 nm, and the particle diameter of the composite including silicon and silicon dioxide is 50 to 1000 nm.

Citation List

Patent Literature

Patent Document 1: Japanese Patent Application Laid-Open Publication No. 2015-037057

SUMMARY OF INVENTION

Technical Problem

In Patent Document 1, it is stated that the average particle diameter of silicon is preferably 1 to 100 nm, more preferably 1 to 20 nm, in terms of further suppressing expansion of battery materials and providing superior cycle characteristics of lithium secondary batteries. However, the condition of average particle diameter of silicon alone was not sufficient to suppress the loss of conductive contact between active material particles due to expansion and contraction of the negative electrode repeated during charge and discharge of lithium ion secondary batteries.

The invention aims to suppress expansion and contraction during charge and discharge of nonaqueous electrolyte secondary batteries including lithium ion secondary batteries in the case of using Si-based negative electrode active materials, improve the lifespan (cycle characteristics) of nonaqueous electrolyte secondary batteries, and improve rapid charging properties.

Solution to Problem

One embodiment of the invention is a negative electrode for nonaqueous electrolyte secondary battery that includes: a negative electrode active material layer including a negative electrode active material, a binder, and a conductive additive. The negative electrode includes a negative electrode active material, a binder, and a conductive additive.

The negative electrode active material includes: a silicon-based active material (A) including $SiO_x$ (where x is a number satisfying $0.5 \leqq x \leqq 1.6$);

a carbon-based active material (B) composed of secondary particles formed by agglomeration of primary particles; and

a carbon-based active material (C) composed of primary particles different from the carbon-based active material (B).

An average particle diameter of metallic silicon particles contained in the silicon-based active material (A) is 0.5 nm or more and 10 nm, and
the conductive additive has a shape of a line, in which a diameter of the line is 1 nm or more and 4 nm or less, and a length of the line is 2 $\mu$m or more and 15 $\mu$m or less.

Effects of Invention

The negative electrode for nonaqueous electrolyte secondary battery of the invention suppresses expansion and contraction and even in the case of using Si-based negative electrode active material and it is possible to provide a negative electrode for nonaqueous electrolyte secondary battery and a nonaqueous electrolyte secondary battery using the negative electrode excellent in rapid charge and discharge.

DESCRIPTION OF THE EMBODIMENTS

Embodiments of the invention are described below. One embodiment is a negative electrode for nonaqueous electrolyte secondary battery that includes: a negative electrode active material layer including a negative electrode active material, a binder, and a conductive additive. The negative electrode includes a negative electrode active material, a binder, and a conductive additive.
The negative electrode active material includes: a silicon-based active material (A) including $SiO_x$ (where x is a number satisfying $0.5 \leqq x \leqq 1.6$);

a carbon-based active material (B) composed of secondary particles formed by agglomeration of primary particles; and
a carbon-based active material (C) composed of primary particles different from the carbon-based active material (B).

An average particle diameter of metallic silicon particles contained in the silicon-based active material (A) is 0.5 nm or more and 10 nm, and
the conductive additive has a shape of a line, in which a diameter of the line is 1 nm or more and 4 nm or less, and a length of the line is 2 $\mu$m or more and 15 $\mu$m or less.
In the embodiment, the nonaqueous electrolyte secondary battery is a battery that mainly uses an organic solvent-based electrolyte and capable of repeatedly performing charge and discharge. A lithium ion secondary battery is listed as the nonaqueous electrolyte secondary battery. The nonaqueous electrolyte secondary battery includes a negative electrode for nonaqueous electrolyte secondary battery as its constituent member. In the embodiment, the negative electrode is a thin plate-shaped or sheet-shaped battery member in which a negative electrode active material layer is formed by applying or rolling and drying a mixture including a negative electrode active material on a negative electrode current collector which is a metal foil such as copper foil. That is, the negative electrode is composed of a negative electrode current collector and negative electrode active material layers including negative electrode active material applied on both surfaces thereof. In the embodiment, the negative electrode active material layer preferably includes a negative electrode active material, a binder, and a conductive additive. The negative electrode active material is a substance used in the negative electrode among substances involved in reactions that generate electrical energy. The binder is generally a substance for binding negative electrode active material particles in order to bring particle-like negative electrode active materials into electrical contact with each other. The conductive additive is a material for reducing the resistance of the electrode.
In the embodiment, the negative electrode active material includes a silicon-based active material (A) including $SiO_x$ (where x is a number satisfying $0.5 \leqq x \leqq 1.6$) and a carbon-based active material. Here, the silicon-based active material (A) is a silicon oxide having the chemical formula $SiO_x$, where x in the formula is a number satisfying $0.5 \leqq x \leqq 1.6$. The silicon-based active material (A) may be a single compound or a mixture of multiple compounds. The silicon-based active material is preferably in the form of particles having substantially uniform or non-uniform sizes. The negative electrode active material may further include a lithium silicon compound. The lithium silicon compound is a compound including lithium element and silicon element, such as those with the chemical formulas $Li_{4.4}Si$, $Li_{3.75}Si$, and $Li_4SiO_4$ (lithium silicate). The lithium silicon compound is a stable compound and does not release lithium during charge and discharge of the nonaqueous electrolyte secondary battery. Therefore, by using in combination with a silicon-based active material that tends to cause volume change during charge and discharge of the nonaqueous electrolyte secondary battery, volume change of the negative electrode active material layer can be suppressed. Furthermore, the silicon-based active material (A) may be doped with lithium in advance. In the case of the presence of lithium silicon compound or lithium-doped silicon, the average particle diameter of the silicon-based active material (A) refers to the overall average particle diameter of these silicon-containing compounds and the like, unless otherwise specified. In this specification, the average particle diameter of the silicon-based active material (A) is expressed as $D50_A$. It is preferable that the average particle diameter of metallic silicon particles contained in the silicon-based active material (A) is 0.5 nm or more and 10 nm. A silicon-based active material having an average particle diameter of 7 $\mu$m or more and 13 $\mu$m may be used as the silicon-based active material (A) of the embodiment. The particle diameter of metallic silicon may be measured by the following method: a cross-section of silicon-based active material particles is processed by focused ion beam (FIB) processing, and arbitrary 10 metallic silicon particles are observed by transmission electron microscope (TEM). From electron microscope imaging at approximately the center of each metallic silicon particle, the area of the metallic silicon particle is calculated, and the diameter of a circle having the same area is regarded as the particle diameter of metallic silicon.

In this specification, the particle diameter of particles of the negative electrode active material is expressed as Da [$\mu$m], which is a particle diameter in the case of the cumulative particle volume from the small particle side reaching a [%] of the previous particle volume based on volume-based particle size distribution. D50 is the particle diameter (unit: $\mu$m) in the case of the cumulative particle volume from the small particle side reaching 50 [%] of the previous particle volume based on volume-based particle size distribution, which is the average particle diameter.

The negative electrode active material further includes a carbon-based active material. The carbon-based active material is preferably natural graphite, artificial graphite, hard carbon, soft carbon, or any mixture thereof. Here, graphite is a carbon material having hexagonal platelike crystals of a hexagonal system, and may be called graphite, graphite, etc. Natural graphite and artificial graphite include natural graphite having a coating of amorphous carbon, and artificial graphite having a coating of amorphous carbon. Here, amorphous carbon is a carbon material that may have a structure partially similar to graphite, has a structure in which microcrystals are randomly networked, and is amorphous as a whole. Examples of amorphous carbon include carbon black, coke, activated carbon, carbon fiber, hard carbon, soft carbon, mesoporous carbon, and the like. In the case of using artificial graphite, it is preferable that the interlayer distance d value ($d_{002}$) is 0.33 nm or more. The crystal structure of artificial graphite is generally thinner than that of natural graphite. In the case of using artificial graphite as a negative electrode active material for nonaqueous electrolyte secondary batteries, particularly lithium ion secondary batteries, it is necessary to have an interlayer distance into which lithium ions may be inserted. The interlayer distance that allows insertion and removal of lithium ions may be estimated by the d value ($d_{002}$), and insertion and removal of lithium ions are performed without problems if the d value is 0.33 nm or more. In the embodiment, it is preferable to include at least two types of carbon-based active materials. The two types of carbon-based active materials are called carbon-based active material (B) and carbon-based active material (C), respectively. The carbon-based active material (B) is preferably a carbon-based active material composed of secondary particles formed by agglomeration of primary particles. The carbon-based active material (B) is preferably artificial graphite whose surface is coated with amorphous carbon. Further, the carbon-based active material (C) is a carbon-based active material that has primary particles different from the primary particles of the carbon-based active material (B), and in which primary particles do not agglomerate and do not form secondary particles. The carbon-based active material (C) is preferably artificial graphite whose surface is not coated. In this specification, the average particle diameter of the carbon-based active material (B) is expressed as $D50_B$, and the average particle diameter of the carbon-based active material (C) is expressed as $D50_C$ (both units are $\mu$m). A carbon-based active material having an average particle diameter of 10 to 60 $\mu$m may be used as the carbon-based active material (B) of this embodiment, and a carbon-based active material having an average particle diameter of 6 to 25 $\mu$m may be used as the carbon-based active material (C) of this embodiment.

In this embodiment, in the case that, among the respective average particle diameters $D50_A$ [$\mu$m], $D50_B$ [$\mu$m], and $D50_C$ [$\mu$m] of the silicon-based active material (A), carbon-based active material (B), and carbon-based active material (C), the maximum average particle diameter value is defined as $D50_{max}$ and the minimum average particle diameter value among these average particle diameters is defined as $D50_{min}$, it is preferable that the value of $D50_{max}$ / $D50_{min}$ is smaller than 2. By combining negative electrode active materials having such a relationship of average particle diameters, the packing density of the negative electrode active material particles is optimized, and it becomes possible to suppress expansion and contraction accompanying charge and discharge.

Moreover, regarding the blending of the negative electrode active material, it is particularly preferable that the content of the silicon-based active material (A) is greater than 5 mass% and less than 50 mass% with respect to the total amount of negative electrode active material in the negative electrode active material layer. More preferably, the content of the silicon-based active material (A) is greater than 10 mass% and less than 20 mass%. In the case of the content of the silicon-based active material (A) being too large, the volume change of the negative electrode active material during charge and discharge of the nonaqueous electrolyte secondary battery becomes large, which is not preferable. Moreover, in the case of the content of the silicon-based active material (A) being too small, the effect of achieving high energy density is difficult to obtain.

The above negative electrode active material can achieve good electrical contact by binding particles together with a binder. The binder preferably includes poly(meth)acrylic acid, a metal salt of poly(meth)acrylic acid, an alkyl ester of poly(meth)acrylic acid, or any mixture thereof. Compounds suitable as binders are, for example, polyacrylic acid, polymethacrylic acid; sodium polyacrylate, potassium polyacrylate, sodium polymethacrylate, potassium polymethacrylate; ethyl polyacrylate, ethyl polyacrylate, butyl polyacrylate, methyl polymethacrylate, ethyl polymethacrylate, butyl polymethacrylate, and may be any mixture thereof. The content of the binder is preferably 2 mass% or more and less than 10 mass% with respect to the total solid content of the negative electrode active material layer. In the case of the content of the binder being too large, the portion where the active material surface is covered by the binder increases, so there is a risk that ion conductivity or electron conductivity may decrease. Moreover, in the case of the content of the binder being too small, there is a risk that electrical contact between negative electrode active material particles may not be performed appropriately.

As a component of the binder, in addition to the above compounds, it is particularly preferable to further include carboxymethyl cellulose (referred to as "CMC"), which is a derivative of cellulose, or a metal salt of carboxymethyl cellulose (for example, sodium carboxymethyl cellulose, potassium carboxymethyl cellulose). Carboxymethyl cellulose or a metal salt of carboxymethyl cellulose plays a role in stabilizing the above binder compounds and also stabilizes the electrical contact of the negative electrode active material. In the case of further adding CMC or a metal salt of CMC as a component of the binder, the content of CMC or CMC metal salt is preferably 0.05 mass% or more and 1.5 mass% or less, particularly 0.08 mass% or more and 0.8 mass% or less, and further 0.15 mass% or more and 0.30 mass% or less, with respect to the total solid content of the negative electrode active material layer.

In the embodiment, it is preferable that the content of the silicon-based active material (A) is 5 mass% or more and 50 mass% or less with respect to the total solid content of the negative electrode active material layer, and the content of the binder is 2 mass% or more and 8 mass% or less with respect to the total solid content of the negative electrode active material layer.

It is further preferable that the content of the silicon-based active material is 10 mass% or more and 20 mass% or less with respect to the total solid content of the negative electrode active material layer, and the content of the binder is 2 mass% or more and 6 mass% or less with respect to the total solid content of the negative electrode active material layer.

Moreover, it is even more preferable that the content of the silicon-based active material (A) is 15 mass% or more and 20 mass% or less with respect to the total solid content of the negative electrode active material layer, and the content of the binder is 2.5 mass% or more and 3.8 mass% or less with respect to the total solid content of the negative electrode active material layer.

By appropriately adjusting the content of the silicon-based active material (A) and the binder, the energy density of the nonaqueous electrolyte secondary battery can be improved.

The negative electrode active material layer preferably further includes a conductive additive. The conductive additive is a material for reducing the resistance of the electrode. Examples of the conductive additive include carbon materials such as carbon fibers like carbon nanofibers, carbon black such as acetylene black and Ketjen black, activated carbon, graphite, mesoporous carbon, fullerenes, and carbon nanotubes. In the embodiment, it is particularly preferable to use carbon nanotubes (referred to as "CNT") as the conductive additive. CNT is a substance in which a six-membered ring network of carbon atoms (graphene) has a single-layer or multi-layer coaxial tube structure, and includes single-wall carbon nanotubes (single-layer, referred to as "SWCNT") and multi-wall carbon nanotubes (multi-layer, referred to as "MWCNT"). Either CNT may be used, but it is preferable to use bundled SWCNT having a shape in which SWCNT gather and become longer in diameter and length than a single SWCNT, such that the conductive network in the negative electrode does not break in the case of expansion and contraction occurring in the negative electrode active material layer. That is, the conductive additive preferably has a linear shape. It is very preferable that the diameter of the line of the conductive additive is 1 nm or more and 4 nm or less, and the length of the line is 2 $\mu$m or more and 15 $\mu$m or less. The SWCNT as the conductive additive is preferably mixed with at least one of the silicon-based active material (A), the carbon-based active material (B), and the carbon-based active material (C) in a state of being dispersed in a solvent in advance, the SWCNT is attached to the surface of the at least one active material, and the linear-shaped (made longer in diameter and length) SWCNT is disposed between at least two of the silicon-based active material (A), the carbon-based active material (B), and the carbon-based active material (C). Furthermore, to support the conductivity in the negative electrode active material layer, carbon black may be used in combination separately from the SWCNT.

In the case of using CNT as the conductive additive, the content of CNT is preferably 0.01 mass% or more and 1 mass% or less, particularly 0.03 mass% or more and 0.8 mass% or less, and further 0.1 mass% or more and 0.5 mass% or less, with respect to the total solid content of the negative electrode active material layer.

In addition, electrode additives generally used for electrode formation, such as thickeners, dispersants, stabilizers, and the like, may be appropriately used in the negative electrode active material layer.

Another embodiment of the invention is a nonaqueous electrolyte secondary battery that includes at least the negative electrode for nonaqueous electrolyte secondary battery of one embodiment, a positive electrode for nonaqueous electrolyte secondary battery, a separator, and a nonaqueous electrolyte.

The nonaqueous electrolyte secondary battery of the embodiment includes at least a negative electrode for nonaqueous electrolyte secondary battery, a positive electrode for nonaqueous electrolyte secondary battery, a separator, and a nonaqueous electrolyte as constituent members thereof.

In the embodiment, the positive electrode is a thin plate-shaped or sheet-shaped battery member in which a positive electrode active material layer is formed by applying or rolling and drying a mixture including a positive electrode active material on a positive electrode current collector which is a metal foil such as aluminum foil. That is, the positive electrode is composed of a positive electrode current collector and a positive electrode active material layer including a positive electrode active material applied on both surfaces or one surface thereof. In the embodiment, the positive electrode active material layer preferably includes a positive electrode active material and a binder. The positive electrode active material is a substance used for the positive electrode among substances involved in reactions that generate electrical energy. The binder is generally a substance for binding positive electrode active material particles in order to bring particle-like positive electrode active materials into electrical contact with each other.

The positive electrode active material used in the embodiment preferably includes a lithium-nickel-based composite oxide as the positive electrode active material. The lithium-nickel-based composite oxide is a transition metal composite oxide containing lithium and nickel represented by the general formula $Li_xNi_yMe_{(1-y)}O_2$ (where Me is at least one or more metals selected from the group composed of Al, Mn, Na, Fe, Co, Cr, Cu, Zn, Ca, K, Mg, and Pb). It is particularly preferable to include a lithium-manganese-based composite oxide. Examples of the lithium-manganese-based composite oxide may include lithium manganate ($LiMnO_2$) having a zigzag layered structure, spinel-type lithium manganate ($LiMn_2O_4$), and the like. The positive electrode active material particularly includes a lithium nickel manganese cobalt composite oxide having a layered crystal structure represented by the general formula $Li_xNi_yCo_zMn_{(1-y-z)}O_2$. Here, x in the general formula is $1 \leqq x \leqq 1.2$, y and z are positive numbers satisfying y+z<1, and the value of y is 0.5 or more. Since a single-phase composite oxide becomes difficult to synthesize in the case where the ratio of manganese increases, it is desirable that $1-y-z \leqq 0.4$. To obtain a high-capacity battery, it is particularly preferable that y>1-y-z and y>z. The lithium-nickel-based composite oxide having this general formula is a lithium nickel cobalt manganese oxide (hereinafter sometimes referred to as "NCM"). NCM is a lithium-nickel-based oxide suitably used for achieving high capacity of batteries.

As a binder that forms the positive electrode active material layer together with the positive electrode active material, fluorine resins such as polyvinylidene fluoride (PVDF), polytetrafluoroethylene (PTFE), and polyvinyl fluoride (PVF), conductive polymers such as polyanilines, polythiophenes, polyacetylenes, and polypyrroles, synthetic rubbers such as styrenebutadiene rubber (SBR), butadiene rubber (BR), chloroprene rubber (CR), isoprene rubber (IR), and acrylonitrile butadiene rubber (NBR), or polysaccharides such as carboxymethyl cellulose (CMC), xanthan gum, guar gum, and pectin may be listed.

Moreover, the positive electrode active material layer may also include a conductive additive in some cases. As conductive additives that may be used in some cases, carbon materials such as carbon fibers like carbon nanofibers, carbon black such as acetylene black and Ketjen black, activated carbon, graphite, mesoporous carbon, fullerenes, carbon nanotubes, etc. may be listed. In the embodiment, it is particularly preferable to use carbon nanotubes (CNT) as the conductive additive. CNT is a substance in which a six-membered ring network of carbon atoms (graphene) has a single-layer or multi-layer coaxial tube structure, and includes single-wall carbon nanotubes (single-layer, SWCNT) and multi-wall carbon nanotubes (multi-layer, MWCNT). Either CNT may be used, but it is preferable to use bundled SWCNT having a shape in which SWCNTs gather and are made longer in diameter and length than a single SWCNT, such that the conductive network in the positive electrode does not break in the case of expansion and contraction occurring in the positive electrode active material layer. Furthermore, in order to support conductivity in the positive electrode active material layer, carbon black may be used in combination separately from SWCNT. In addition, electrode additives generally used for electrode formation, such as thickeners, dispersants, stabilizers, etc., may be appropriately used in the positive electrode active material layer.

The nonaqueous electrolyte secondary battery of the embodiment includes a separator as a constituent member. For the separator, for example, a polyolefin film may be used. Polyolefin refers to a compound obtained by polymerizing or copolymerizing $\alpha$-olefins such as ethylene, propylene, butene, pentene, hexene, etc., and examples include polyethylene, polypropylene, polybutene, polypentene, polyhexene, and copolymers thereof. In the case of using a polyolefin film as the separator, it is advantageous to have a structure having pores that are closed in response to battery temperature rising, that is, a porous or microporous polyolefin film. By the polyolefin film having such a structure, even if the battery temperature rises, the separator may be closed (shut down) to cut off the ion flow. That is, a uniaxially stretched polyolefin film contracts and closes pores according to heating of the battery, making it possible to prevent short circuits between the positive and negative electrodes. In order to exhibit the shutdown effect, it is very preferable to use a porous polyethylene membrane.

Moreover, a crosslinked film may be used as the separator. Since porous or microporous polyolefin films have the property of contracting in response to heating, the film contracts and shuts down in response to overheating of the battery. However, in the case of the thermal shrinkage rate of the film being too large, the area of the film changes greatly, which may conversely cause large current flow. A crosslinked polyolefin film has an appropriate thermal shrinkage rate, so it may contract just enough to close pores without greatly changing the area even in response to overheating.

The separator used in the embodiment may have a heat-resistant fine particle layer on one side or both sides of the separator. In this case, the heat-resistant fine particle layer provided to prevent overheating of the battery is composed of inorganic fine particles have heat resistance with a heat-resistant temperature of 150°C or higher and that are stable to electrochemical reactions. Examples of such inorganic fine particles include inorganic oxides such as silica, alumina ($\alpha$-alumina, $\beta$-alumina, $\theta$-alumina), iron oxide, titanium oxide, barium titanate, and zirconium oxide; and minerals such as boehmite, zeolite, apatite, kaolin, spinel, mica, and mullite.

The nonaqueous electrolyte secondary battery of the embodiment includes a nonaqueous electrolyte. The nonaqueous electrolyte is an electrically conductive substance in which an ionic substance is dissolved in an organic solvent. The above-mentioned negative electrode for nonaqueous electrolyte secondary battery and the positive electrode for nonaqueous electrolyte secondary battery are superimposed, a separator is disposed between them, and a nonaqueous electrolyte secondary battery element including this and the nonaqueous electrolyte is one unit of the main constituent members of the nonaqueous electrolyte secondary battery. Usually, a laminate formed by superimposing multiple negative electrode for nonaqueous electrolyte secondary batteries and multiple positive electrode for nonaqueous electrolyte secondary batteries via multiple separators is immersed in the nonaqueous electrolyte. The nonaqueous electrolyte that may be used in the embodiment is mainly a nonaqueous electrolytic solution, and preferably is a mixture including chain carbonates such as dimethyl carbonate (DMC), diethyl carbonate (DEC), ethyl methyl carbonate (EMC), di-n-propyl carbonate, di-t-propyl carbonate, di-n-butyl carbonate, di-isobutyl carbonate, or di-t-butyl carbonate, and cyclic carbonates such as propylene carbonate (PC) and ethylene carbonate (EC). The nonaqueous electrolytic solution is obtained by dissolving lithium salts such as lithium hexafluorophosphate ($LiPF_6$), lithium borofluoride ($LiBF_4$), LiFSI, lithium perchlorate ($LiClO_4$) in such a carbonate mixture.

The nonaqueous electrolytic solution may also include, as an additive, a cyclic carbonate compound different from the above-mentioned cyclic carbonates. Vinylene carbonate (VC) may be listed as a cyclic carbonate used as an additive. Moreover, a cyclic carbonate compound having halogen may be used as an additive. These cyclic carbonates are also compounds that form protective coatings for the negative electrode for nonaqueous electrolyte secondary battery and the positive electrode for nonaqueous electrolyte secondary battery during the charge and discharge process of the nonaqueous electrolyte secondary battery. In particular, they are compounds capable of preventing attack on the positive electrode active material containing lithium-nickel-based composite oxide by sulfur-containing compounds such as the above-mentioned disulfonic acid compound or disulfonic acid ester compound. Examples of cyclic carbonate compounds having halogen include fluoroethylene carbonate (FEC), difluoroethylene carbonate, trifluoroethylene carbonate, chloroethylene carbonate, dichloroethylene carbonate, trichloroethylene carbonate, and the like. Fluoroethylene carbonate, which is a cyclic carbonate compound having halogen and having an unsaturated bond, is particularly preferably used.

Moreover, the nonaqueous electrolytic solution may further include a disulfonic acid compound as an additive. A disulfonic acid compound is a compound having two sulfo groups in one molecule, and includes disulfonic acid salt compounds in which sulfo groups form salts together with metal ions, or disulfonic acid ester compounds in which sulfo groups form esters. One or two of the sulfo groups of the disulfonic acid compound may form salts together with metal ions, or may be in an anionic state. Examples of disulfonic acid compounds include methanedisulfonic acid, 1,2-ethanedisulfonic acid, 1,3-propanedisulfonic acid, 1,4-butanedisulfonic acid, benzenedisulfonic acid, naphthalenedisulfonic acid, biphenyldisulfonic acid, salts thereof (lithium methanedisulfonate, lithium 1,2-ethanedisulfonate, etc.), and anions thereof (methanedisulfonic acid anion, 1,2-ethanedisulfonic acid anion, etc.). Moreover, disulfonic acid ester compounds may be listed as disulfonic acid compounds, and chain disulfonic acid esters such as alkyl diesters or aryl diesters of methanedisulfonic acid, 1,2-ethanedisulfonic acid, 1,3-propanedisulfonic acid, 1,4-butanedisulfonic acid, benzenedisulfonic acid, naphthalenedisulfonic acid, or biphenyldisulfonic acid; and cyclic disulfonic acid esters such as methylene methanedisulfonic acid ester, ethylene methanedisulfonic acid ester, propylene methanedisulfonic acid ester, and the like may be used.

The nonaqueous electrolyte secondary battery of the embodiment is usually sealed with an exterior body. Sealing means that at least a part of the nonaqueous electrolyte secondary battery element is wrapped with an exterior body material so as not to be exposed to outside air. The exterior body of the nonaqueous electrolyte secondary battery has gas barrier properties and is either a housing capable of sealing the nonaqueous electrolyte secondary battery element, or has a bag shape composed of flexible materials. For the exterior body, an aluminum can, an aluminum laminate sheet in which aluminum foil and polypropylene or the like are laminated, or the like may be suitably used. That is, any material may be used for the exterior body as long as it is a material that does not allow the nonaqueous electrolyte to leach to the outside. A laminate film may be used that has a heat-resistant protective layer such as polyester, polyamide, or liquid crystalline polymer on the outermost layer of the exterior body, and has a sealant layer composed of thermoplastic resin composed of polyethylene, polypropylene, ionomer, acid-modified polyethylene such as maleic acid-modified polyethylene, acid-modified polypropylene such as maleic acid-modified polypropylene, polyethylene terephthalate (PET), polyethylene naphthalate (PEN), polyethylene isophthalate (PEI), blends of PET and PEN, blends of PET and PEI, polyamide resin, blends of polyamide resin and PET, blends of xylylene group-containing polyamide and PET, and the like on the innermost layer. The exterior body may be formed using one or multiple sheets of these laminate films combined by adhesion or welding, and further multilayered. Aluminum, tin, copper, nickel, and stainless steel may be used as the gas barrier metal layer. The thickness of the metal layer is preferably 30 to 50 $\mu$m. Particularly preferably, an aluminum laminate, which is a laminate of aluminum foil and a polymer such as polyethylene or polypropylene, may be used.

The nonaqueous electrolyte secondary battery of the embodiment may be in various forms such as a coin-type battery, a laminate-type battery, a wound-type battery, and the like. Examples

The embodiments of the invention have been described above. Examples of the invention will be described below. Both the above embodiments and the Examples described below are merely illustrative descriptions of the invention, and are not intended to limit the technical scope of the invention to the configurations of specific embodiments or specific Examples.

(Preparation of Positive Electrode, All Examples and Comparative Examples) $Li(Ni_{0.9}Co_{0.05}Mn_{0.05})O_2$ (97.5 mass%) as a positive electrode active material, polyvinylidene fluoride (PVDF, 1.5 mass%) as a positive electrode binder, and carbon nanotubes (multi-wall carbon nanotubes (MWCNT, 1 mass%)) as a conductive additive were mixed to form a positive electrode active material mixture. A positive electrode slurry was prepared by dispersing the positive electrode active material mixture in N-methyl-2-pyrrolidone. This positive electrode slurry was uniformly applied to one surface of an aluminum current collector having a thickness of 12 $\mu$m. The thickness of the coating film was adjusted such that the initial charge capacity per unit area would be 4.0 mAh/cm$^2$. After drying, a positive electrode was manufactured by compression-molding with a roll press and adjusted such that the density of the positive electrode active material layer would be 3.5 g/cm$^3$.

(Preparation of Negative Electrode, Example 1)

As negative electrode active materials, $SiO_x$ (x=1.0, $D_{50}$=11.0$\mu$m, Si average particle diameter=1.1 $\mu$m), which is a silicon-based active material (A); artificial graphite ($D_{50}$: 13.9$\mu$m), which is a carbon-based active material (B) composed of secondary particles formed by agglomeration of primary particles; and artificial graphite ($D_{50}$: 9.5$\mu$m), which is a carbon-based active material (C) composed of primary particles that do not agglomerate with each other to form secondary particles, were used. A negative electrode active material mixture was obtained with a negative electrode active material mass ratio (mass ratio of $SiO_x$ of silicon-based active material (A) to artificial graphite of carbon-based active materials (B) and (C) of the negative electrode, (expressed as (A)/[(B)+(C)] in the table)) of 15/85, and a mass ratio of carbon-based active material (B) to carbon-based active material (C) of 1/1. This active material mixture (96.6 mass%), a polyacrylic acid-based binder as a negative electrode binder (trade name: 10CLPAH, Fujifilm Wako Pure Chemical Corporation, 3.0 mass%), single-wall carbon nanotube as a conductive additive (diameter of the line: 1.8 nm, length of the tip: 15 $\mu$m, SWCNT, 0.05 mass%), and carboxymethyl cellulose (CMC, 0.1 mass%) were dissolved and dispersed in an aqueous solvent to prepare a negative electrode slurry. This negative electrode slurry was uniformly applied onto a Cu current collector having a thickness of 8 $\mu$m. The thickness of the coating film was adjusted such that the initial charge capacity per unit area would be 4.3 mAh/cm$^2$. Thereafter, a negative electrode was manufactured by compression-molding with a roll press and adjusted such that the density of the composite material layer would be 1.65 g/cm$^3$.

Moreover, the $SiO_x$ used in the Examples may be obtained as appropriate from, for example, Sigma-Aldrich, High Purity Chemical Laboratory Co., Ltd., Kanto Chemical Co., Inc., Fujifilm Wako Pure Chemical Corporation, etc., and the surface state such as surface coating components and roughness, particle diameter, etc. may be adjusted by using them alone or in combination and by employing known methods such as heat treatment such as firing, chemical treatment such as CVD method, mechanical treatment such as pulverization and classification, and sputtering. Moreover, graphite may be obtained as appropriate from Nippon Graphite Industries, Co., Ltd., Resonac Corporation, etc., and the surface state such as surface coating components and roughness, particle diameter, etc. may be adjusted by using them alone or in combination and by employing known methods such as heat treatment such as firing, chemical treatment such as CVD method, mechanical treatment such as pulverization and classification, and sputtering.

The conductive additive used here is bundled SWCNT having a shape in which SWCNTs gather and are made longer in diameter and length than a single SWCNT. A plurality of them are disposed on the surface of the negative electrode active material so as to contact any two or more types of negative electrode active materials among the silicon-based active material (A), carbon-based active material (B), and carbon-based active material (C). Such SWCNTs may be obtained from, for example, Meijo Nano Carbon Co., Ltd., Honjo Chemical Corporation, and Kusumoto Chemicals, Ltd.

In other Examples and Comparative Examples, the type of negative electrode active material used and the blending amount of the negative electrode active material were changed as shown in Table 1. Moreover, the blending amount of the linear conductive additive, the diameter of the line, and the length of the line were as shown in Table 1. The sources of the silicon-based active material (A) $SiO_x$, carbon-based active materials (B) and (C), and conductive additive were the same as those in Example 1. The mass ratio of carbon-based active material (B) to carbon-based active material (C) was 7:3 for Example 6, and 1:1 for other Examples and Comparative Examples, the same as Example 1. The types and amounts of binder and conductive additive used were as shown in Table 1. The method for producing the negative electrode active material layer was the same as Example 1 in all Examples and Comparative Examples. In the table, the % indication represents the ratio to the total solid content of the negative electrode active material.

(Production of Lithium Ion Secondary Battery, All Examples and Comparative Examples)

A positive electrode and negative electrode cut to 3 cm × 3 cm were arranged to face each other with a separator interposed therebetween. A separator having a thickness of 10 μm with ceramic coating on both sides of a microporous polyethylene film was used.

The nonaqueous electrolytic solution was prepared by mixing an organic solvent and a supporting salt. Cyclic carbonate (EC) and chain carbonates (DEC, EMC) were adjusted to a volume ratio of 1/6, and further, lithium hexafluorophosphate (LiPF6) and fluoroethylene carbonate (FEC) were added as supporting salts.

The above positive electrode, negative electrode, separator, and nonaqueous electrolytic solution were placed in a laminate exterior body, and the laminate was sealed to produce a lithium ion secondary battery which is a nonaqueous electrolyte secondary battery. The positive electrode and negative electrode had tabs connected and were in a state of being electrically connected from the outside of the laminate.

(Evaluation of Lithium Ion Secondary Battery)

For the lithium ion secondary batteries produced in each Example and Comparative Example, the capacity retention rate and the decrease in average voltage during 1C discharge were measured and evaluated by the following methods.

(Energy Density)

The fabricated battery was charged at 7.2 mA, and after the upper limit voltage reached 4.2 V, it was charged at constant voltage until the total charging time reached 12 hours. Thereafter, it was discharged at constant current at 7.2 mA until the lower limit voltage reached 2.5 V. After charging again under the same conditions, it was left in a constant temperature chamber at 45°C for 3 days, discharged again under the same conditions, and charge and discharge was performed once more. The capacity and average voltage during the final discharge were evaluated. Moreover, after completion of this evaluation, the thickness of the laminate-type battery (hereinafter sometimes simply referred to as "cell") was evaluated.

From the thickness of the cell, the sum of the thickness of the positive electrode active material layer, half the thickness of the positive electrode current collector, the thickness of the separator, the thickness of the negative electrode active material layer, and half the thickness of the negative electrode current collector, which is the unit component of the laminate-type battery, was calculated. Specifically, the thickness of the laminate, half the thickness of the positive electrode current collector, and half the thickness of the negative electrode current collector were subtracted from the thickness of the cell.

According to the following calculation formula:

(Capacity during cell discharge) × (Average voltage during cell discharge) / (Electrode area) / (Thickness of positive electrode active material layer + Half thickness of positive electrode current collector + Thickness of separator + Thickness of negative electrode active material layer + Half thickness of negative electrode current collector), [Formula 1]

the energy density of the unit component portion of the laminate-type battery was calculated.

(Capacity Retention Rate)

The fabricated battery was placed in a constant temperature chamber at 45°C, charged at 30 mA, and after the upper limit voltage reached 4.2 V, charged at constant voltage until the total charging time reached 2.5 hours. Thereafter, it was discharged at constant current of 30 mA until the lower limit voltage reached 2.5 V. The charge and discharge was repeated 100 times, and the ratio of the 100th discharge capacity to the 1st discharge capacity was taken as the capacity retention rate after 300 cycles.

[Table 1]

Table 1: Blending of negative electrode active material

| | Silicon-based active material (A) | | Carbon-based active material (B) $S_B[\mu m]$ | Carbon-based active material (C) $S_c[\mu m]$ | $D50_{max}/D50_{min}$ | Negative electrode active material mass ratio (A)/[(B)+(C)] | Binder PAA content [%] | Conductive additive SWCNT | | |
|---|---|---|---|---|---|---|---|---|---|---|
| | $D50_A$ [$\mu m$] | Si average particle diameter [nm] | | | | | | Content [%] | Diameter [nm] | Length [$\mu m$] |
| Example 1 | 11.0 | 1.1 | 13.9 | 9.5 | 1.46 | 15:85 | 3 | 0.05 | 1.8 | 6.1 |
| Example 2 | 8.2 | 0.8 | 13.9 | 9.5 | 1.70 | 15:85 | 3 | 0.05 | 1.8 | 6.1 |
| Example 3 | 13.1 | 10.2 | 13.9 | 9.5 | 1.46 | 15:85 | 2 | 0.05 | 1.8 | 6.1 |
| Example 4 | 11.0 | 1.1 | 13.9 | 9.5 | 1.46 | 15:85 | 3 | 0.05 | 4 | 6.1 |
| Example 5 | 11.0 | 1.1 | 13.9 | 9.5 | 1.46 | 15:85 | 4 | 0.05 | 1.1 | 6.1 |
| Example 6 | 11.0 | 1.1 | 13.9 | 9.5 | 1.46 | 15:85 | 2 | 0.05 | 1.8 | 15 |
| Example 7 | 11.0 | 1.1 | 13.9 | 9.5 | 1.46 | 15:85 | 3 | 0.05 | 1.9 | 2.0 |
| Example 8 | 11.0 | 1.1 | 13.9 | 9.5 | 1.46 | 10·90 | 3 | 0.05 | 1.8 | 6.0 |
| Example 9 | 11.0 | 1.1 | 13.9 | 9.5 | 1.46 | 20:80 | 3 | 0.05 | 1.8 | 6.1 |
| Example 10 | 11.0 | 1.1 | 13.9 | 9.5 | 1.46 | 15:85 | 3 | 0.5 | 1.8 | 6.1 |
| Example 11 | 11.0 | 1.1 | 13.9 | 9.5 | 1.46 | 15:85 | 3 | 0.02 | 1.8 | 6.1 |
| Comparative Example 1 | 11.0 | 1.1 | 13.9 | 9.5 | 1.46 | 15:85 | 3 | 5 | 1.8 | 6.1 |
| Comparative Example 2 | 11.0 | 1.1 | 13.9 | 9.5 | 1.16 | 15:85 | 3 | 0 | - | - |
| Comparative Example 3 | 11.0 | 1.1 | 22.5 | 9.5 | 2.37 | 15:85 | 3 | 0.05 | 1.8 | 7.0 |
| Comparative Example 4 | 14.8 | 30.3 | 13.9 | 12.5 | 1.18 | 15:85 | 3 | 0.05 | 1.8 | 6.1 |
| Comparative Example 5 | 5.4 | 0.4 | 17.3 | 9.5 | 3.39 | 15:85 | 3 | 0.05 | 2.0 | 6.1 |
| Comparative Example 6 | 8.2 | 0.8 | 13.9 | 9.5 | 1.70 | 15:85 | 3 | 0.05 | 0.5 | 50 |
| Comparative Example 7 | 11.0 | 1.1 | 13.9 | 9.5 | 1.46 | 15:85 | 1 | 0.05 | 0.5 | 1.0 |

EP 4 693 460 A1

[Table 2]

| Table 2: Battery performance evaluation | | | |
|---|---|---|---|
| | Capacity retention rate after 300 cycles [%] | Energy density [Wh/L] | Eegative electrode delamination |
| Example 1 | 95.7 | 767 | No |
| Example 2 | 95.2 | 758 | No |
| Example 3 | 94.3 | 743 | No |
| Example 4 | 95.6 | 755 | No |
| Example 5 | 94.1 | 763 | No |
| Example 6 | 93.5 | 754 | No |
| Example 7 | 95.0 | 751 | No |
| Example 8 | 96.0 | 730 | No |
| Example 9 | 93.2 | 782 | No |
| Example 10 | 95.6 | 767 | No |
| Example 11 | 93.1 | 745 | No |
| Comparative Example 1 | rapid deterioration | 760 | Yes |
| Comparative Example 2 | 83.0 | 730 | No |
| Comparative Example 3 | 86.0 | 746 | No |
| Comparative Example 4 | rapid deterioration | 755 | Yes |
| Comparative Example 5 | 84.5 | 745 | No |
| Comparative Example 6 | 96.0 | 717 | Yes |
| Comparative Example 7 | rapid deterioration | 730 | Yes |

The nonaqueous electrolyte secondary battery using the negative electrode for nonaqueous electrolyte secondary battery of the Example of the invention has high energy density and high capacity retention rate after charge and discharge. On the other hand, the nonaqueous electrolyte secondary battery using the negative electrode for nonaqueous electrolyte secondary battery of the Comparative Example showed a decrease in either energy density or capacity retention rate, and could not improve both energy density and lifespan. By optimizing the diameter of the line and length of the Si metallic particles and conductive additive contained in the silicon-based active material, appropriate particle packing density of the negative electrode active material layer may be obtained, and expansion of the electrode during cycle characteristics can be suppressed, thereby improving the cycle capacity retention rate of the nonaqueous electrolyte secondary battery. Furthermore, by setting the ratio of the maximum diameter to the minimum diameter of the average particle diameter among the silicon-based active material and carbon-based active material particles to 2 or less, electrical connection can be maintained in cycle characteristics without having to lengthen the conductive additive than necessary.

The cause of being able to suppress expansion and contraction of the mixed negative electrode including $SiO_x$ as the silicon-based active material and graphite as two types of carbon-based active materials is not clear. However, from the results in Table 1, it may be said that by adjusting the diameter of the line and length of the line of SWCNT as the conductive additive to be used, setting these amounts within predetermined ranges, and appropriately selecting the Si particle diameter present in $SiO_x$ within a predetermined range, it is possible to suppress expansion and contraction of the entire electrode due to the composite negative electrode including the silicon-based active material and two types of carbon-based active materials.

As described above, the negative electrode for nonaqueous electrolyte secondary battery of the invention has been described in detail, but the invention is not limited to the above embodiments and the above Examples, and it goes without saying that various improvements and modifications may be made within the scope that does not depart from the gist of the invention.

Claims

1.  A negative electrode for nonaqueous electrolyte secondary battery,

    wherein the negative electrode comprises a negative electrode active material, a binder, and a conductive additive, and
    the negative electrode active material comprises: a silicon-based active material (A) comprising $SiO_x$ (where x is a number satisfying $0.5 \leqq x \leqq 1.6$);

    a carbon-based active material (B) composed of secondary particles formed by agglomeration of primary particles; and
    a carbon-based active material (C) composed of primary particles different from the carbon-based active material (B),

    wherein an average particle diameter of metallic silicon particles contained in the silicon-based active material (A) is 0.5 nm or more and 10 nm, and
    the conductive additive has a shape of a line, in which a diameter of the line is 1 nm or more and 4 nm or less, and a length of the line is 2 $\mu$m or more and 15 $\mu$m or less.

2.  The negative electrode for nonaqueous electrolyte secondary battery according to claim 1,
    wherein in a case of average particle diameters of the silicon-based active material (A), the carbon-based active material (B), and the carbon-based active material (C) being $D50_A$ [$\mu$m], $D50_B$ [$\mu$m], and $D50_C$ [$\mu$m], respectively, a value of a maximum average particle diameter among the average particle diameters being $D50_{max}$, and a value of a minimum average particle diameter among the average particle diameters being $D50_{min}$, a value of $D50_{max} / D50_{min}$ is smaller than 2.

3.  The negative electrode for nonaqueous electrolyte secondary battery according to claim 1 or 2, wherein an average particle diameter $D50_A$ of the silicon-based active material (A) is 7 $\mu$m or more and 13 $\mu$m.

4.  The negative electrode for nonaqueous electrolyte secondary battery according to any one of claims 1 to 3, wherein the carbon-based active material (B) and the carbon-based active material (C) comprise artificial graphite, hard carbon, soft carbon, or any mixture thereof.

5.  The negative electrode for nonaqueous electrolyte secondary battery according to any one of claims 1 to 4, wherein the carbon-based active material (B) is an artificial graphite having a surface coated with amorphous carbon, and the carbon-based active material (C) is an artificial graphite having a surface uncoated.

6.  The negative electrode for nonaqueous electrolyte secondary battery according to any one of claims 1 to 5, wherein a content of the silicon-based active material is 10 mass% or more and 20 mass% or less with respect to a total amount of the silicon-based active material (A), the carbon-based active material (B), and the carbon-based active material (C) in the negative electrode.

7.  The negative electrode for nonaqueous electrolyte secondary battery according to any one of claims 1 to 6, wherein the conductive additive comprises a carbon nanotube.

8.  The negative electrode for nonaqueous electrolyte secondary battery according to any one of claims 1 to 7, wherein the conductive additive is an aggregated single-wall carbon nanotube in which single-wall carbon nanotubes are aggregated.

9.  The negative electrode for nonaqueous electrolyte secondary battery according to any one of claims 1 to 8, wherein a portion of the conductive additive exists in a state of being preliminarily adhered to at least one surface of the silicon-based active material (A), the carbon-based active material (B), and the carbon-based active material (C).

10. The negative electrode for nonaqueous electrolyte secondary battery according to any one of claims 1 to 9, wherein the binder comprises a polyacrylic acid.

11. A nonaqueous electrolyte secondary battery, comprising: at least the negative electrode for nonaqueous electrolyte secondary battery according to any one of claims 1 to 10, a positive electrode for nonaqueous electrolyte secondary battery, a separator, and an electrolyte.

# EP 4 693 460 A1

| INTERNATIONAL SEARCH REPORT | International application No. |
|---|---|
| | **PCT/JP2023/044965** |

**A. CLASSIFICATION OF SUBJECT MATTER**

*H01M 4/36*(2006.01)i; *H01M 4/13*(2010.01)i; *H01M 4/38*(2006.01)i; *H01M 4/48*(2010.01)i; *H01M 4/62*(2006.01)i; *H01M 4/587*(2010.01)i

FI: H01M4/36 E; H01M4/38 Z; H01M4/48; H01M4/587; H01M4/62 Z; H01M4/36 B; H01M4/36 C; H01M4/13

According to International Patent Classification (IPC) or to both national classification and IPC

**B. FIELDS SEARCHED**

Minimum documentation searched (classification system followed by classification symbols)

H01M4/36; H01M4/13; H01M4/38; H01M4/48; H01M4/62; H01M4/587

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2023-503706 A (CONTEMPORARY AMPEREX TECHNOLOGY CO., LTD.) 31 January 2023 (2023-01-31)<br>paragraphs [0001], [0028]-[0033], [0135]-[0137], [0144], [0149], [0169]-[0187] | 1-11 |
| Y | JP 2018-137194 A (HITACHI AUTOMOTIVE SYSTEMS, LTD.) 30 August 2018 (2018-08-30)<br>paragraph [0023] | 1-11 |
| Y | WO 2021/085255 A1 (MURATA MANUFACTURING CO., LTD.) 06 May 2021 (2021-05-06)<br>paragraph [0044], fig. 4 | 8 |
| Y | JP 2022-529987 A (LG ENERGY SOLUTION LTD.) 27 June 2022 (2022-06-27)<br>paragraph [0010] | 8 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **07 February 2024** | **20 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

14

## INTERNATIONAL SEARCH REPORT
### Information on patent family members

International application No.

**PCT/JP2023/044965**

| Patent document cited in search report | | | Publication date (day/month/year) | Patent family member(s) | | | Publication date (day/month/year) |
|---|---|---|---|---|---|---|---|
| JP | 2023-503706 | A | 31 January 2023 | US | 2022/0367872 | A1 | |
| | | | | paragraphs [0002], [0033]-[0039], [0178]-[0180], [0189], [0195], [0215]-[0239] | | | |
| | | | | WO | 2022/140902 | A1 | |
| | | | | EP | 4075542 | A1 | |
| | | | | KR | 10-2022-0110862 | A | |
| | | | | CN | 115917780 | A | |
| JP | 2018-137194 | A | 30 August 2018 | (Family: none) | | | |
| WO | 2021/085255 | A1 | 06 May 2021 | US | 2022/0246979 | A1 | |
| | | | | paragraph [0061], fig. 4 | | | |
| | | | | CN | 114641871 | A | |
| JP | 2022-529987 | A | 27 June 2022 | US | 2022/0320518 | A1 | |
| | | | | paragraph [0013] | | | |
| | | | | WO | 2021/066554 | A1 | |
| | | | | EP | 3951953 | A1 | |
| | | | | KR | 10-2021-0040801 | A | |
| | | | | CN | 113785422 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015037057 A